# EUROPEAN PATENT APPLICATION

(11) **EP 1 923 794 A1**
(43) Date of publication of application: **21.05.2008**
(21) Application number: 07118034.3
(22) Date of filing: 08.10.2007
(51) Int. Cl.: G06F 13/16, G06F 12/08

(54) **Apparatus and method for managing data**

(30) Priority: 16.11.2006 KR 20060113437
(71) Applicant: Samsung Electronics Co., Ltd., Suwon-si, Gyeonggi-do 442-742 (KR)
(72) Inventor: Shin, Dong-Kun, Seoul (KR)
(74) Representative: Clark, David James

(57) **Abstract**

An apparatus and method for managing data, the data-managing apparatus including: a command receiver (110) that receives a move command for data, a memory interface unit (150) that accesses a first storage device currently storing the data and second storage device to store the data according to the move command, and a memory-managing unit (140) that moves the data from the first storage device to the second storage device without transferring the data through a system memory.

## Description

### BACKGROUND OF THE INVENTION

### 1. Field of the Invention

Aspects of the present invention relate to an apparatus and method for managing data, and more particularly, but not excusively, to an apparatus and method for managing data that enables data to be directly exchanged (and not through a system memory) when data is exchanged between an extended memory and a storage medium.

### 2. Description of the Related Art

Virtual memory is not real memory, but is used like memory in a computer and an operating system. Generally, a hard disk drive (HDD) is used to implement virtual memory. Specifically, the virtual memory is allocated to the HDD. That is, a computer loads data that is used into a basic memory and the unused data into the virtual memory in order to secure a working space. When data from the virtual memory is required, the computer re-loads data from the virtual memory into the basic memory, thereby preventing a decrease of performance. Data is transferred from the basic memory to the virtual memory or from the virtual memory to the basic memory, which is referred to as "swapping.''

Here, a data unit that is swapped is a page, and the data unit's size ranges from 1 kilobyte (kB) to several megabytes (MBs). When using virtual memory, the consumption of physical storage space and the process speed of the entire system are reduced due to the swapping process.

A memory-managing unit is hardware that converts a virtual address into a physical address, which allows the generated logical address (virtual address) to indicate an area of a physical memory (physical address) using a relocation register when a logical address generated by a user process accesses a memory. The swapping is performed by allocating the virtual memory even when the amount of memory allocated by all operating processes is more than the amount of memory included in the system. The swapping, which is performed between the virtual memory HDD and the real memory, generates overhead. Accordingly, a method of equipping an additional extended memory in a main board or hard disk was developed, thereby reducing the swapping overhead in the system.

In other words, swapping is done between the memory and the extended memory by additionally equipping a storage medium (the extended memory), such as a flash memory, that has a relatively fast input/output (I/O) speed. However, if data is transferred between the storage medium (such as an HDD or nonvolatile cache) and the extended memory, the data is always transferred through the system memory. If data is transferred from the HDD to the extended memory, the HDD data is stored in the memory, and is swapped to the extended memory.

Here, the central processing unit (CPU) typically performs predetermined operations to enable the data to be transferred through the memory. As a result, a load may be generated in the CPU. Example embodiments aim to address a disadvantage associated with the prior art, whether identified herein, or otherwise.

### SUMMARY OF THE INVENTION

According to an aspect of the present invention, there is provided a data-managing apparatus including: a command receiver that receives a move command for data, a memory interface unit that accesses a first storage device currently storing the data and a second storage device to store the data according to the move command, and a memory-managing unit that moves the data from the first storage device to the second storage device without transferring the data through a system memory.

According to another aspect of the present invention, there is provided a data-managing method including: receiving a move command for data, accessing a first storage device currently storing the data and a second storage device to store the data according to the move command, and moving the data from the first storage device to the second storage device without transferring the data through a system memory.

According to yet another aspect of the present invention, there is provided a data managing method including: accessing a first storage device currently storing data and a second storage device to store the data; and moving the data from the first storage device to the second storage device without transferring the data through a system memory.

According to the present invention there is provided an apparatus and method as set forth in the appended claims. Other features of the invention will be apparent from the dependent claims, and the description which follows.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is a block diagram showing a data-managing apparatus according to an embodiment of the present invention;
FIG. 2 is a block diagram showing a storage unit according to an embodiment of the present invention;
FIG. 3 is a conceptual view showing the input of data to an extended memory according to an embodiment of the present invention;
FIG. 4 is a conceptual view showing the output of data from an extended memory according to an embodiment of the present invention;
FIG. 5 is a flowchart showing that data is moved during a read operation according to an embodiment of the present invention; and
FIG. 6 is a flowchart showing that data is moved during a write operation according to an embodiment of the present invention.

### DESCRIPTION OF EXAMPLE EMBODIMENTS

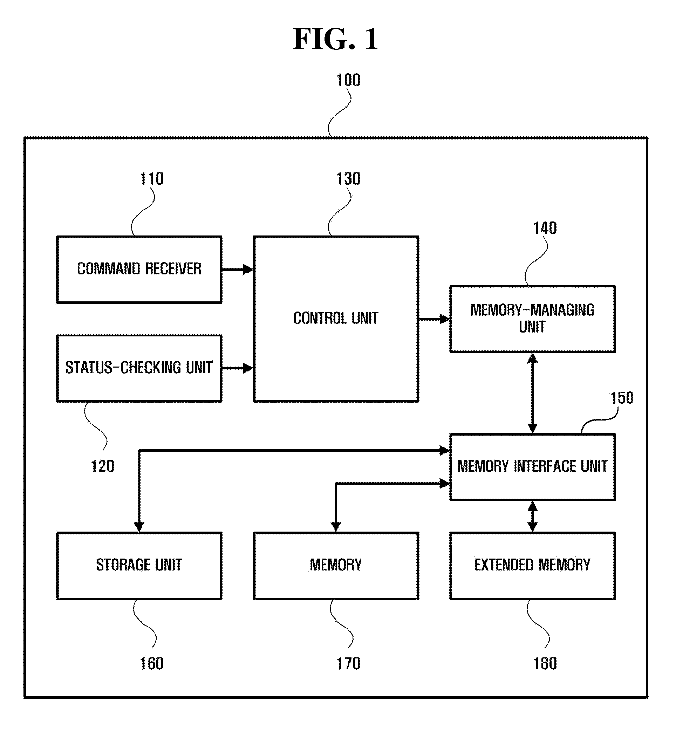

FIG. 1 is a block diagram showing a data-managing apparatus 100 according to an embodiment of the present invention. The apparatus 100 includes a command receiver 110, a status-checking unit 120, a control unit 130, a memory-managing unit 140, a memory interface unit 150, a storage unit 160, a memory 170, and an extended memory 180.

The storage unit 160, the memory 170, and the extended memory 180 are storage devices to store data. In example embodiments of the present invention, the storage unit 160 and the extended memory 180 are non-volatile storage devices (such as read-only memory, flash memory, and a hard disk), and the memory 170 is a volatile storage devices (such as random access memory).

For example, the storage unit 160 may be a hard disk, a flash memory, a compact flash card (CF card), a secure digital card (SD card), a smart media card (SM card), a multimedia card (MMC), or a memory stick that can input/output information. The memory 170 and the extended memory 180 temporarily store data for a smooth operation of the data-managing apparatus 100.

Here, the extended memory 180 is a storage device that is included in the data-managing apparatus 100 in order to reduce overhead of the system due to swapping.

The storage unit 160 may include a nonvolatile cache and may be located with the extended memory 180 in a single module. For example, an area for the nonvolatile cache and extended memory 180 can exist in one flash memory.

The command receiver 110 receives a data-move command. Here, the move command includes a read command and a write command for the storage unit 160. In other words, the read command is a command to extract data stored in the storage unit 160, and the write command is a command to store data in the storage unit 160.

The status-checking unit 120 checks the memory use (i.e. checks the size of the area being used by the memory 170), and transmits the result (determination) to the control unit 130.

The memory interface unit 150 accesses a first storage device that stores data and a second storage device that stores data according to a move command. Specifically, the address in the first storage device for the corresponding data is included in the move command (i.e. the read command and write command). The memory interface unit 150 accesses the first storage device using the move command, and accesses a predetermined area of the second storage device in which data will be stored by a control command of the memory-managing unit 140. The first storage device may be the storage unit 160 and the second storage device may be the extended memory 180, or the first storage device may be the extended memory 180 and the second storage device may be the storage unit 160.

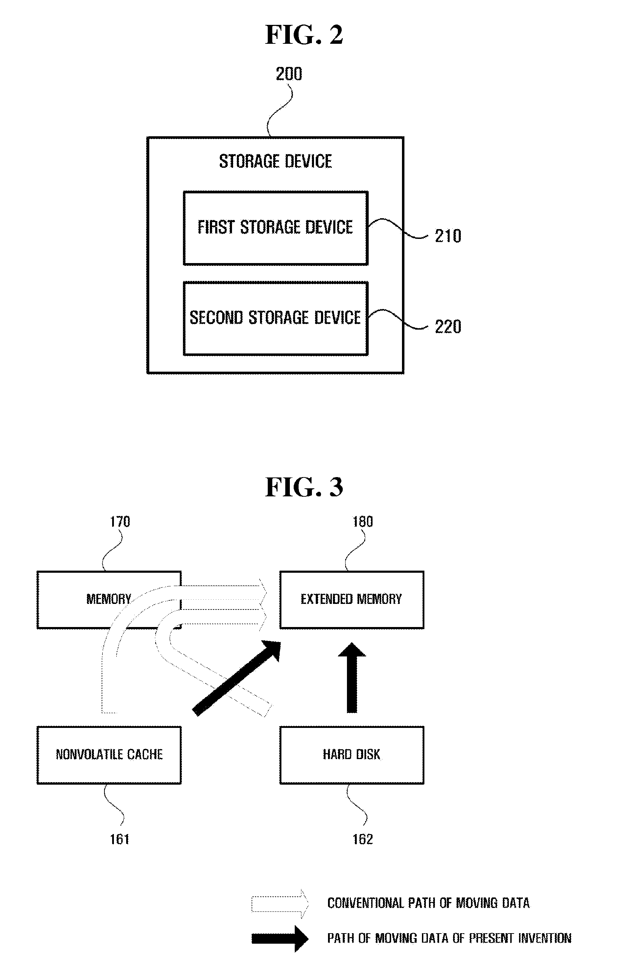

The memory-managing unit 140 controls the memory interface unit 150 in order to move data from the first storage device to the second storage device. Also, the memory-managing unit 140 can perform a compaction, swapping, or a compression of the memory 170. The memory-managing unit 140 can move data from the first storage device to the second storage device without using the memory 170. The memory-managing unit 140 can move data between the first and second storage devices or modify a path for storing data according to whether the first storage device is physically adjacent to the second storage device (which will be described in detail with reference to FIG. 2).

The control unit 130 determines whether the first storage device is physically adjacent to the second storage device, and enables swapping by controlling the memory-managing unit 140 according to the memory 170 status transmitted from the status-checking unit 120. The control unit 130 entirely controls the command receiver 110, the status-checking unit 120, the memory-managing unit 140, the memory-interface unit 150, the storage unit 160, the memory 170, the extended memory 180, and the data-managing apparatus 100.

FIG. 2 is a block diagram showing a storage unit according to an embodiment of the present invention. Referring to FIG. 2, the first storage device 210 and the second storage device 220 are included in one physical storage device 200.

As described above, the memory-managing unit 140 can decide to move data or to modify a path for storing data according to whether the first storage device 210 is physically adjacent to the second storage device 220. If the first storage device 210 and second storage device 220 exist as separate modules, the memory-managing unit 140 extracts data stored in the first storage device 210, and stores the extracted data in the second storage device 220. However, if the first storage device 210 and second storage device 220 exist as a single module (as shown in FIG. 2), the memory-managing unit 140 changes the storage path of a page in which data is stored among the first storage device 210 to a storage path of the second storage device 220, without extracting data stored in the first storage device 210.

For example, if the first storage device 210 is the extended memory 180 illustrated in FIG. 1, the second storage device 220 is the nonvolatile cache, and the first storage device 210 and second storage device 220 are included in a single module (i.e., storage device 200), the memory-managing unit 140 changes the storage path of the page in which data is stored from among the extended memory areas to a storage path of the nonvolatile cache.

FIG. 3 is a conceptual view showing the input of data to an extended memory according to an embodiment of the present invention. According to the conventional art, if data stored in the storage unit (such as the nonvolatile cache 161 or the hard disk 162) is input to the extended memory 180, the data is transmitted to the extended memory 180 through the memory 170. According to embodiments of the present invention, the memory-managing unit 140 directly (and not through the memory 170) moves data stored in the nonvolatile cache 161 or the hard disk 162 to the extended memory 180 according to a read command.

The read command may include a flag that details whether data is to be transmitted by way of the memory 170. For example, if the flag is 0, the memory-managing unit 140 moves data by way of the memory 170, and if the flag is 1, the memory-managing unit 140 moves data so that the data does not pass through the memory 170.

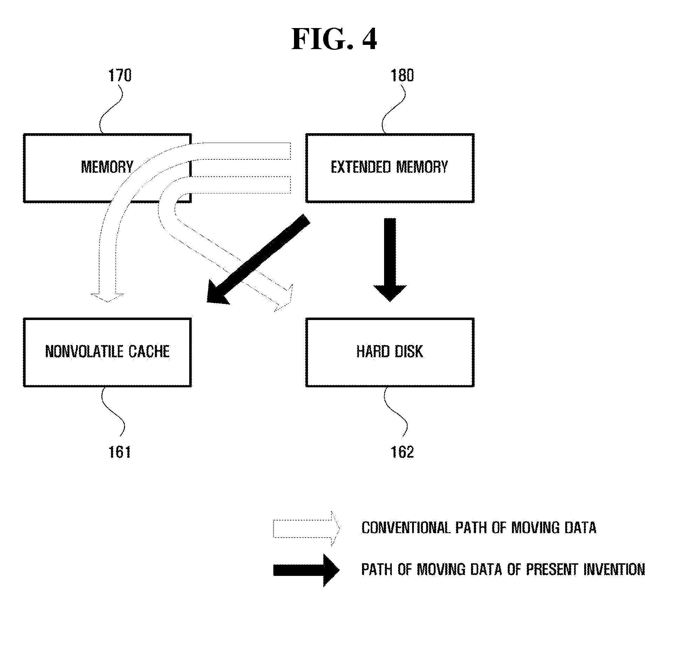

FIG. 4 is a conceptual view showing the output of data from an extended memory according to an embodiment of the present invention. To output data from the extended memory 180 to be stored in the storage unit (such as the nonvolatile cache 161 or the hard disk 162), the data is transmitted to the storage unit through the memory 170. According to aspects of the present invention, the memory-managing unit 140 directly (and not through the memory 170) moves data stored in the extended memory 180 to the nonvolatile cache 161 or the hard disk 162 according to a write command.

The write command may include a flag that details whether data is to be transmitted by way of the memory 170. For example, if the flag is 0, the memory-managing unit 140 moves data through the memory 170. If the flag is 1, the memory-managing unit 140 moves data so that the data does not pass through the memory 170.

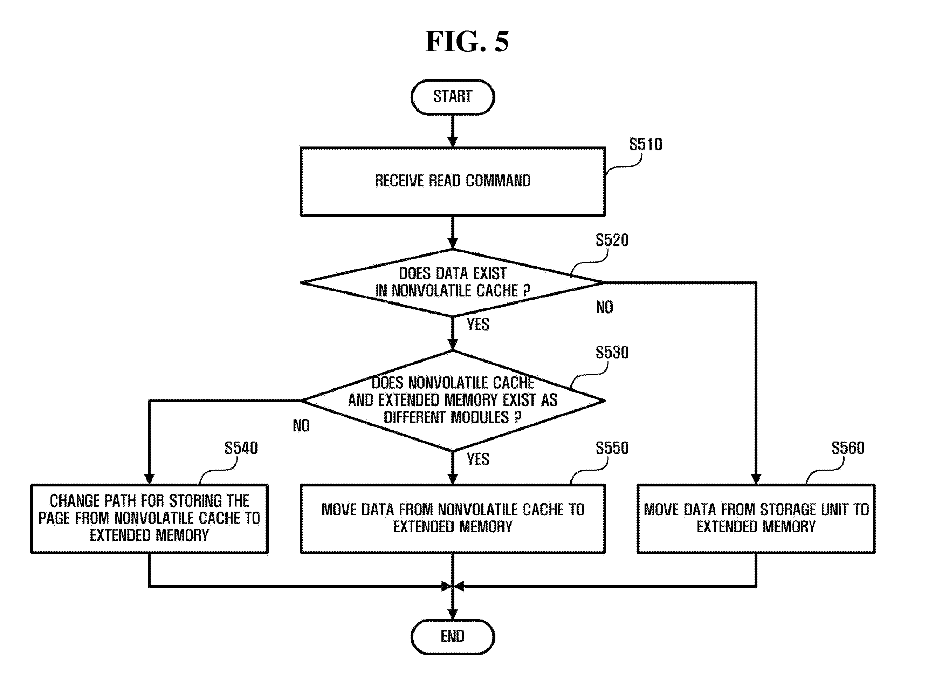

FIG. 5 is a flowchart showing the moving of data during a read operation according to an embodiment of the present invention. Referring to FIGs. 1 and 5, a process of extracting data stored in the storage unit 160 will now be described.

First, the command receiver 110 of the data-managing apparatus 100 receives a read command in order to read data in operation S510.

The received read command is transmitted to the control unit 130, and the control unit 130 checks whether the data exists in a nonvolatile cache in operation S520. The nonvolatile cache can temporarily store the data in order to easily access the data. The control unit 130 checks whether the corresponding data is stored in the nonvolatile cache.

If the data is not stored in the nonvolatile cache (operation S520), the control unit 130 controls the memory-managing unit 140 to extract the data from the storage unit 160 and moves the data to the extended memory 180 in operation S560. At this time, the memory-managing unit 140 can move the data from the storage unit 160 to the extended memory 180 without using the memory 170 (i.e., without moving the data through the memory 170).

If the data is stored in the nonvolatile cache (operation S520), the control unit 130 checks whether the nonvolatile cache and the extended memory 180 exist as different modules in operation S530. If the nonvolatile cache and the extended memory 180 exist as different modules (operation S530), the memory-managing unit 140 moves the data from the nonvolatile cache to the extended memory 180 in operation S550. If the nonvolatile cache and the extended memory 180 exist as a single module (operation S530), the memory-managing unit 140 changes a storage path of the page that is storing the data from a storage path of the nonvolatile cache to a storage path of the extended memory 180 in operation S540.

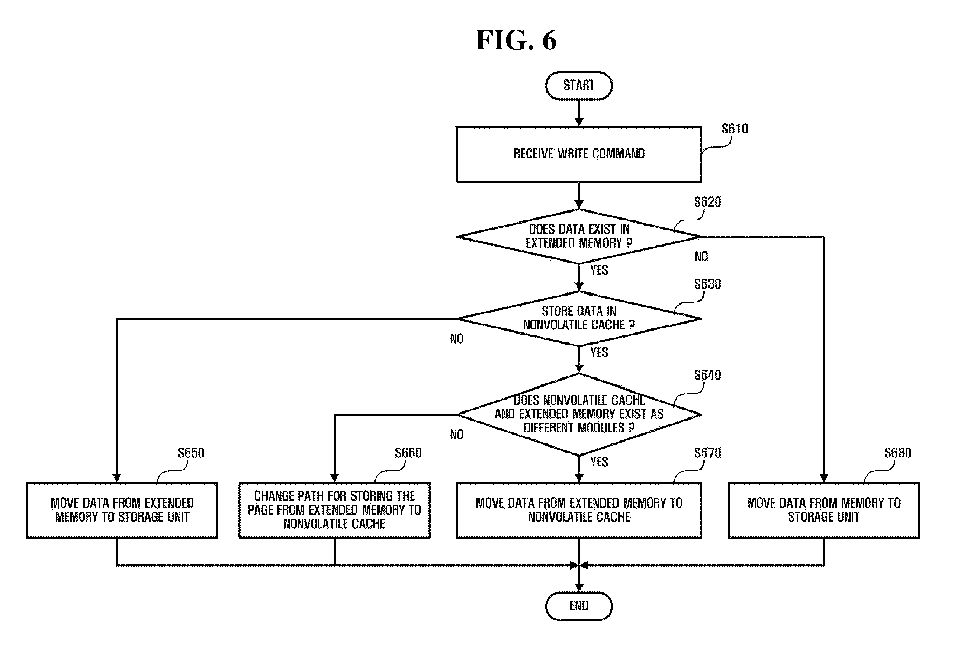

FIG. 6 is a flowchart showing the moving of data during a write operation according to an embodiment of the present invention. Referring to FIGs. 1 and 6, a process of outputting data stored in the extended memory 180 and storing the data in the storage unit 160 or nonvolatile cache will now be described.

First, the command receiver 110 of the data-managing apparatus 100 receives a write command in order to store data in operation S610.

The received write command is transmitted to the control unit 130, and the control unit 130 checks whether the data exists in the nonvolatile cache S620. If the status-checking unit 120 determines that the status of the memory 170 is a maximum value (size of area being used by memory is at a maximum), the data is temporarily stored in the extended memory 180. Thus, the control unit 130 checks whether the corresponding data is stored in the extended memory 180 in operation S620.

If the data does not exist in the extended memory 180 (operation S620), the control unit 130 moves the data from the memory 170 to the storage unit 160 by controlling the memory-managing unit 140 in operation S680.

If the data exists in the extended memory 180 (operation S620), the control unit 130 determines whether to store the data in the nonvolatile cache in operation S630. The data is temporarily stored in the nonvolatile cache until the data is used again.

If the data will not be stored in the nonvolatile cache (operation S630), the memory-managing unit 140 moves the data from the extended memory 180 to the storage unit 160 in operation S650. At this time, the memory-managing unit 140 can move the data without using the memory 170 (i.e., without moving the data through the memory 170).

If the data will be stored in the nonvolatile cache (operation S630), the control unit 130 checks whether the nonvolatile cache and the extended memory 180 exist as different modules in operation S640. If the nonvolatile cache and the extended memory 180 exist as different modules (operation S640), the memory-managing unit 140 moves the data from the extended memory 180 to the nonvolatile cache in operation S670. If the nonvolatile cache and the extended memory 180 exist as a single module (operation S640), the memory-managing unit 140 changes a storage path of the page that is storing the data from a storage path of the extended memory 180 to a storage path of the nonvolatile cache S660.

As is described above, the apparatus and method for managing data according to the embodiments of the present invention directly exchanges data between storage devices in the system, without transferring the data through a system memory, thereby performing the data exchange rapidly. Furthermore, aspects of the present invention limit the transfer of data through the system memory, thereby reducing the workload of the CPU.

Aspects of the present invention can also be embodied as computer-readable codes on a computer-readable recording medium. Also, codes and code segments to accomplish the present invention can be easily construed by programmers skilled in the art to which the present invention pertains. The computer-readable recording medium is any data storage device that can store data which can be thereafter read by a computer system or computer code processing apparatus. Examples of the computer-readable recording medium include read-only memory (ROM), random-access memory (RAM), CD-ROMs, magnetic tapes, floppy disks, optical data storage devices, and a computer data signal embodied in a carrier wave comprising a compression source code segment comprising the code and an encryption source code segment comprising the code (such as data transmission through the Internet). The computer-readable recording medium can also be distributed over network-coupled computer systems so that the computer-readable code is stored and executed in a distributed fashion.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A data managing apparatus comprising:
a command receiver (110) that receives a move command for data;
a memory interface (150) unit that accesses a first storage device (180) currently storing the data and a second storage device (160) to store the data according to the move command; and
a memory-managing (140) unit that moves the data from the first storage device (180) to the second storage device (160) without transferring the data through a system memory (170).

2. The apparatus as claimed in claim 1, wherein the first storage device (180) is an extended memory, and the second storage device (160) is a nonvolatile cache or a hard disk drive.

3. The apparatus as claimed in claim 1, wherein the second storage device (160) is an extended memory, and the first storage device (180) is a nonvolatile cache or a hard disk drive.

4. The apparatus as claimed in claim 1, 2 or 3, wherein the memory-managing unit (140) modifies a path for storing the data when the first storage device (180) is comprised in a same storage unit as the second storage device (160).

5. The apparatus as claimed in claim 4, further comprising:
a control unit (130) that determines whether the first storage device (180) is comprised in the same storage unit as the second storage device (160).

6. The apparatus as claimed in any one of claims 1-5, further comprising:
a control unit (130) to determine whether to store the data in a third storage device (161), and to control the memory-managing unit (140) to move the data from the first storage device (180) to the third storage device (161) if the control unit (130) determines to store the data in the third storage device (161).

7. The apparatus as claimed in claim 6, wherein the third storage device (161) is a nonvolatile cache.

8. The apparatus as claimed in any preceding claim, further comprising:
a control unit (130) to determine whether the data exists in the first storage device (180), and to control the memory-managing unit (140) to move the data from the system memory (170) to the second storage device (160) when the data does not exist in the first storage device (180).

9. The apparatus as claimed in any preceding claim, further comprising:
a control unit (130) to determine whether the data exists in a third storage device (161), to control the memory-managing unit (140) to move the data from the first storage device (180) to the second storage device (160) when the data does not exist in the third storage device (161), and to control the memory-managing unit (140) to move the data from the third storage device (161) to the second storage device (160) when the data does exist in the third storage device (161).

10. The apparatus as claimed in claim 2, further comprising:
a control unit (130) to determine whether to store the data in a third storage device (161), and to control the memory-managing unit (140) to move the data from the first storage device (180) to the third storage device (161) if the control unit (130) determines to store the data in the third storage device (161).

11. The apparatus as claimed in claim 2, further comprising:
a control unit (130) to determine whether the data exists in the first storage device (180), and to control the memory-managing unit (140) to move the data from the system memory (170) to the second storage device (160) when the data does not exist in the first storage device (180).

12. The apparatus as claimed in claim 2, further comprising:
a control unit (130) to determine whether the data exists in a third storage device (161), to control the memory-managing unit (140) to move the data from the first storage device (140) to the second storage device (160) when the data does not exist in the third storage device (161), and to control the memory-managing unit (140) to move the data from the third storage device (161) to the second storage device (160) when the data does exist in the third storage (161) device.

13. The apparatus as claimed in claim 9, 10, 11 or 12, wherein the third storage device (161) is a nonvolatile cache.

14. The apparatus as claimed in any preceding claim, wherein the memory-managing unit (140) moves the data from the first storage device (180) to the second storage device (160) without transferring the data through the system memory (170) if the move command includes a flag having a first value.

15. A data managing method comprising:
receiving a move command for data (S510);
accessing a first storage device currently storing the data and a second storage device to store the data according to the move command (S520); and
moving the data from the first storage device to the second storage device without transferring the data through a system memory (S550, S560).

16. The method as claimed in claim 15, wherein the first storage device is an extended memory, and the second storage device is a nonvolatile cache or a hard disk drive.

17. The apparatus as claimed in claim 15, wherein the second storage device is an extended memory, and the first storage device is a nonvolatile cache or a hard disk drive.

18. The method as claimed in claim 15, wherein the moving of the data comprises:
modifying a path for storing the data when the first storage device is comprised in a same storage unit as the second storage device (S540).

19. The method as claimed in claim 18, wherein the moving of the data further comprises:
determining whether the first storage device is comprised in the same storage unit as the second storage device (S530).

20. The method as claimed in claim 15, wherein the moving of the data comprises:
determining whether to store the data in a third storage device;
moving the data from the first storage device to the third storage device if the data is determined to be stored in the third storage device; and
moving the data from the first storage device to the second storage device if the data is determined to not be stored in the third storage device.

21. The method as claimed in claim 15, wherein the moving of the data comprises:
determining whether the data exists in the first storage device; and
moving the data from the system memory to the second storage device if the data is determined to not exist in the first storage device.

22. The method as claimed in claim 15, wherein the moving of the data comprises:
determining whether the data exists in a third storage device;
moving the data from the first storage device to the second storage device if the data is determined to not exist in the third storage device; and
moving the data from the third storage device to the second storage device if the data is determined to exist in the third storage device.

23. The method as claimed in claim 16, wherein the moving of the data comprises:
determining whether the data exists in a third storage device;
moving the data from the first storage device to the second storage device if the data is determined to not exist in the third storage device; and
moving the data from the third storage device to the second storage device if the data is determined to exist in the third storage device.

24. The method as claimed in claim 20, 22 or 23, wherein the third storage device is a nonvolatile cache.

25. The method as claimed in any one of claims 15-24, wherein the moving of the data comprises:
moving the data from the first storage device to the second storage device without transferring the data through the system memory if the move command includes a flag having a first value.

26. A data managing method comprising:
accessing a first storage device currently storing data and a second storage device to store the data (S520); and
moving the data from the first storage device to the second storage device without transferring the data through a system memory (S550, S560).

27. The method as claimed in claim 26, further comprising:
receiving a move command for the data.

28. The method as claimed in claim 26 or 27, wherein the first storage device is an extended memory, and the second storage device is a nonvolatile cache or a hard disk drive.

29. The apparatus as claimed in claim 26 or 27, wherein the second storage device is an extended memory, and the first storage device is a nonvolatile cache or a hard disk drive.

30. The method as claimed in claim 26, 27, 28 or 29, wherein the moving of the data comprises:
modifying a path for storing the data when the first storage device is comprised in a same storage unit as the second storage device.

31. The method as claimed in claim 30, wherein the moving of the data further comprises:
determining whether the first storage device is comprised in the same storage unit as the second storage device.

32. A data managing apparatus comprising:
a memory interface unit (150) that accesses a first storage device (180) currently storing the data and a second storage device (160) to store the data according to the move command; and
a memory-managing unit (140) that moves the data from the first storage device (180) to the second storage device (160) without transferring the data through a system memory (170).

33. The apparatus as claimed in claim 32, further comprising:
a command receiver (110) that receives a move command for data.
